# EUROPEAN PATENT SPECIFICATION

(11) **EP 1 587 863 B1**
(45) Date of publication and mention of the grant of the patent: **27.03.2013**
(21) Application number: 04703538.1
(22) Date of filing: 20.01.2004
(51) Int. Cl.: C08K 3/36, C08K 5/549, C01B 33/12, C01B 33/18

(54) **NETWORK SILICA FOR ENHANCING TENSILE STRENGTH OF RUBBER COMPOUND**
VERNETZTES SILICIUMDIOXID ZUR ERHÖHUNG DER ZUGFESTIGKEIT VON KAUTSCHUKMASSEN
SILICE EN RESEAU POUR L'AMELIORATION DE LA RESISTANCE A LA TENSION DE COMPOSE EN CAOUTCHOUC

(30) Priority: 23.01.2003 KR 2003004453
(43) Date of publication of application: 26.10.2005
(73) Proprietor: Republic of Korea (Chonnam National University), 500-757 Gwangju (KR)
(72) Inventor: SEO, Gon, Seo-gu, 502-244 Gwangju (KR)
(74) Representative: Maiwald Patentanwalts GmbH
(86) International application number: PCT/KR2004/000106
(87) International publication number: WO 2004/078835

(56) References cited:
- EP-A- 0 784 072
- EP-A- 1 083 195
- EP-A- 1 273 634
- US-A- 5 900 450
- US-A- 5 914 364
- US-A- 6 071 997
- US-A- 6 140 393
- US-B1- 6 350 807

## Description

### Technical Field

The present invention relates to three-dimensionally networked silica with bridge chains composing of carbon, hydrogen, oxygen, sulfur and nitrogen atoms among primary particles of silica, which can reinforce effectively rubber compounds suitable for the manufacturing of tire, shoes, belts, hoses etc. More particularly, the present invention relates to networked silica combining silica particles with chemical bonds of methylene, ether, ester and peptide groups. These materials are prepared through two steps: at the first step silica particles react with alkoxy silane molecules having functional groups such as amines, amides, imines, chloride, glycidyl or carboxylic group, and at the second step the condensation reactions between above-mentioned functional groups yield bridge chains among silica particles. Two or three alkoxy groups of alkoxy silane molecules react with superficial silanol groups of silica. The remaining functional groups of alkoxy silane bonded to silica particles react with other functional groups of alkoxy silane bonded to other silica particles, forming bridge chains among them. A good example of bridge chain is aminoglycidylate bonds formed between glycidyl and amine groups. Several other combinations for the formation of bridge chains are possible: amine and chloride groups, glycidyl and chloride groups, and amine and carboxylic groups.

Three dimensionally connected bridge chains among silica particles form a networked structure of silica and provide strong retention for the rupture of rubber compounds when they are dispersed in rubber molecules, resulting in high tensile strengths and toughness at high strain by interlocking and entanglement. The networked silica works as a highly effective reinforcing material with additional advantages such as high miscibility with rubber molecules, reducing the required an amount of the coupling agents and suppression an inactivation of the additives by masking of adsorption sites of silica surface.

### Background Art

Rubber compounds have a unique property suffering a high deformation under a given stress and recovering their own shapes when the stress is released. Their elastic property of rubber compounds makes it possible to be applied them to various products such as tires, conveyers, belts, and shoes. The shock-absorbing function of rubber compounds causes an increase in their application to construction materials to enhance the safety of huge buildings from vibration, especially for earthquake-proof.

The elastic property of rubber compounds resisting to a huge impact is caused by the energy absorbing ability of crosslinked rubber skeletal formed during cure. A high crosslinking density of rubber molecules brings about a high tensile strength, denoting the maximum force required to break rubber compounds under stress. The elongated ratio of a rubber compound at the breakpoint is usually called as 'elongation at break'. Since a high crosslinking density of a rubber compound usually gives a high tensile strength and low elongation at break, its crosslinking density is carefully controlled to obtain a suitable elastic property for its application objectives. Although the crosslinking density of rubber compounds is an important factor determining their tensile strength, there is a strict limit of crosslinking density because too high crosslinking density causes brittleness, losing their elasticity. Therefore, several types of fillers have been employed for rubber compounds to enhance their tensile strength, but not to increase their modulus to prevent becoming rigid. Carbon black is a typical reinforcing material for rubber compounds used in tire manufacturing. The usual black color of tires is due to carbon black added for reinforcing.

Recently, the amount of silica added to rubber compounds as a reinforcing material increases drastically because of environmental consideration. Silica has been widely used in tire manufacturing to enhance the tensile strength of rubber compounds. A significant increase in tensile strength by the addition of silica is attributed to its high mechanical stability. A low rolling resistance of the rubber compounds reinforced with silica lowers fuel consumption of tires, enhancing mileage of cars. Furthermore, the replacement of carbon black by silica in the rubber compounds of tires prevents air pollution, because of low emission of carbon dioxide due to the enhancement of mileage. The environmentally benign characteristics of silica lead its dosing level in tires up now to 70-80 phr.

Although carbon black is an effective reinforcing material for rubber compounds, it cannot enhance both their rolling resistance and traction property simultaneously. These properties of tread compounds are very important for the performance of tire in the terms of steering wheel and brake operation. The better traction property of rubber compounds is expectable with increasing the content of carbon black, the worse their rolling resistance on ground is indispensable. The addition of silica as a reinforcing material to rubber compounds, however, overcomes this difficulty: the both improvements of rolling resistance and adherence on even wet ground and snow-covered ground are achieved. Such improvements with silica reinforcing cause a significant increase in silica content of tire, especially on tread rubber compounds. In addition to these advantages of silica as a reinforcing material silica makes it possible to introduce color to rubber compounds. Various colored rubber compounds reinforced with silica have been sold with high prices compared to black rubber compounds reinforced with carbon black.

Silica has many advantages as a reinforcing material as described above, but the increase in silica content of rubber compounds is limited because of its low dispersion. Although the immiscibility of inorganic silica particles in organic rubber molecules causes the use of the mixture of carbon black and silica, the improved properties of silica reinforced rubber compounds drive the increase in its content in said rubber compounds. In order to maximize tensile strength of rubber compounds by silica adding, its particles should be individually dispersed in rubber compounds to entangle with crosslinked chains of rubber molecules and to contact closely with rubber molecules for a strong attraction. On the contrary, silica particles are not easily miscible with rubber molecules because of their hydrophobicity. Moreover, large molecular size, high molecular weight and low fluidity of rubber molecules prevent to achieve high dispersion of silica. The increase in mixing time of rubber compounds, therefore, is inevitable when silica is added to rubber compound as reinforcing filler, lowering their elasticity and economic feasibility.

The modification of the surface of silica particles by organic silane induces a considerable improvement for high dispersion and low aggregation. The strong affinity between organic molecules coupled on silica particles and rubber molecules drives out better mixing. When the surface of silica particles is coated with organic materials and they contain functional groups to be attractive to rubber molecules, a considerable improvement of both dispersion and reinforcing ability of silica is unequivocal. The fine silica particles can preferably be used to enhance the physical properties of rubber compound such as tensile strength and wear resistance.

Several bifunctional silica coupling reagents coupled silica particles with rubber molecules are developed for these purposes. They usually have two moieties reactive with the silica surface and rubber molecules: silyl groups to react with silanol groups of silica surface and mercapto, amino, vinyl, epoxy and sulfide groups to bind the rubber molecules. Exemplary silica coupling reagent is bis-(3-triethoxysilylpropyl)etrasulfide, which is known commercially as Si-69. Silica coupling reagents usually have two alkoxy groups at opposite ends, so they may tie up silica particles as like coupling silica particles to rubber molecules. Chemically bonded organosilane molecules cover the surface of silica particles, and then, the surface of silica particles becomes highly hydrophobic, resulting in a good dispersion in rubber molecules. Furthermore, the silica coupling reagents which have sulfide linkages in molecular chains show better reinforcing performance than silane only coupled on silica: dissociated sulfide groups combine with double bonds of rubber molecules during curing process, enhancing the modulus and tensile strength of rubber compounds. The entanglement of rubber molecules with silica particles is the main function of silica as a reinforcing materials, but the covalent bonds between rubber molecules and silica particles responsible to the coupling reagents also contribute to the increase in the tensile strength of rubber compounds. Since these advantages due to the coupling reagents are very effective to enhance the elastic properties of rubber compounds, they are essentially added to the rubber compounds of tire and shoes, especially requiring extremely high tensile strength and toughness.

However, they also have disadvantages as well as advantages. The first disadvantage is their excessive loading. Since they can react other species such as accelerators and retarders contained in rubber compounds rather than silica particles and rubber molecules, a part of coupling reagents should be consumed without accomplishing their desired objectives. The loading amount of them, therefore, must be high, compared to the required amount for the quantitative coupling reactions. Although bifunctional silica coupling reagents are exceptionally effective to enhance the reinforcing ability of silica filler, their high costs lower the application of silica as dispersing agents. Amide compounds replace all or part of expensive bifunctional silica coupling reagents to reduce the cost of raw material in tire manufacturing. Furthermore, the undesired reactions of coupling reagents with accelerators or activators are inevitable, increasing the loading level of these expensive chemicals in rubber compounds.

The second disadvantage of the silica coupling reagents is their low efficiency of coupling between silica particles and rubber molecules due to the steric hindrance of solid particles. It is not easy to form bridge chains among silica particles with a certain distance in extremely heterogeneous rubber system. A large fraction of the coupling reagent combines mainly with rubber molecules and thus, a significant increase in modulus of rubber compounds deteriorates their elasticity. The heterogeneity in rubber compounds lowers their tensile strength as well as their elongation at break.

The third disadvantage is related to the mixing of rubber molecules with various additives. The elevation in temperature at mixing step is inevitable. Although elevated temperatures are helpful to achieve high homogeneity of rubber compounds, the undesired preliminary cross-linking reactions are also accelerated with temperature elevation. The temperature control for the rubber compounds at mixing step, therefore, is very important, especially when they comprise silica filler and the sulfide-containing bifunctional silane coupling reagents. Sulfur radicals produced above 170°C from the coupling reagents through the dissociation of their sulfide groups, react with double bonds of rubber molecules. Based on this phenomenon, the mixing temperature of rubber compounds containing the coupling reagents should be controlled to be low to suppress the preliminary cross-linking reactions.

The bifunctional coupling reagents for silica containing alkoxy silyl groups at their terminals and sulfide groups in the center of their skeletal have both advantages and disadvantages as described above. However, their contribution to the enhancement in physical properties is significant, and thus, they are widely applied to silica-reinforced rubber compounds requiring high tensile strength and toughness such as carcass, belt and tread compounds of tires. Since these compounds should endure large impact and repeated stress for a long time, the addition of the coupling reagents are effective to guarantee their stable performance.

The replacement of carbon black by silica in tires as a reinforcing filler is a trend to pursue environmental benignity: to increase their fuel efficiency and life time by improving physical property and stability of rubber compounds, and to reduce the amount of emitted organic materials from carbon black. Therefore, the further improvement of the reinforcing function of silica is important for tire manufacturing in terms of performance and environment preservation.

### Disclosure of Invention

### Technical Problem

In summary, silica must be a promising reinforcing material of rubber compounds with significant advantages, but it also has several difficulties in its application, especially when its loading level is high. The poor dispersion of silica particles in rubber molecules and strong adsorption of additives on the surface of silica particles are obstacles to its successive application. Even though such difficulties may be overcome by addition of the coupling reagents, more efficient methods to maximize their reinforcing abilities without significant disadvantages are still required.

### Technical Solution

Networked silica with a three-dimensional network among silica particles brings about much higher performance as a reinforcing material for rubber compounds compared to conventional silica. The networked silica has bridge chains comprising carbon, hydrogen, oxygen, sulfur, and nitrogen atoms among silica particles. The three-dimensional networks among silica particles entangle rubber molecules, enhancing the resistance to fatigue and resulting in a significant increase in tensile strength. The physical interlocking between rubber molecules and silica particles contributes to the increase in toughness of rubber compounds, but prevents an excessive increase in their modulus not to become brittle.

At the first step of the formation of the network among silica particles, superficial silanol groups react with alkoxy silane molecules having a reactive functional moiety such as amine, glycidyl, chloride, thiol, aldehyde or carboxylic group at their ends. By removing alcohol produced in the condensation reaction between alkoxy groups and silanol groups, silane molecules with the reactive moieties are coupled on silica particles. Since amine and glycidyl groups form a covalent bond, successive reactions of silica particles coupled with alkoxy silane containing amine groups and those coupled with alkoxy silane containing glycidyl groups form covalent bonds among silica particles. Randomly formed covalent bonds build up a network structure among silica particles.

Various kinds of functional groups can be employed to form connecting chains, for example, amine and chloride groups, glycidyl and chloride, epoxy and chloride, and epoxy and thiol groups. The amount and molecular length of coupled silane molecules on silica particles determine the distance and density of the network formed among silica particles. The high density of short bridge chains induces rigid structure of networked silica, while the low density of long bridge chains brings about flexible structure. Since the bridge chains are composed of covalent chemical bonds, the networks among silica particles are strong and stable even at mixing and cure processes of rubber compounds.

Other methods are also employed for the preparation of networked silica. The reaction between silica particles coupled with alkoxy silane containing glycidyl groups and polyethylene diamine, produces networks among silica particles only by two-step reaction effectively. Dicarboxylic acids and dichlorides are also applicable as bridging materials for the silica particles coupled with alkoxy silane containing amine groups at their other ends. Direct reaction of silica particles with diisocynates or dichlorides also produces networked silica through just one step. By the removal of carbon dioxide or hydrogen chloride as condensation products bridge chains are formed among silica particles.

The networked silica prepared along with this invention shows high dispersion in rubber compounds. The networks formed among silica particles prevent their aggregation. The covering of silica particles with organic bridge chains causes the change of their surface property from hydrophilic to hydrophobic, improving dispersion of silica particles in hydrophobic rubber molecules. The openings formed among silica particles among the network of bridge chains also enhance the permeation of rubber molecules into silica particles. Scattered silica particles, hydrophobic surface and the formation of openings for rubber molecule intrusion of networked silica simultaneously bring about its improved dispersion.

It is another object to prevent the inactivation of other additives by their adsorption on silica. Active surface of silica captures them. The disappearance of silanol groups on silica surface through the reaction with alkoxy silane results in the loss of polar absorption sites for reactive additives. The fewer amounts of additives are required to prepare rubber compounds containing the networked silica, saving the expensive chemicals.

### Advantageous Effects

Comparing with conventional silica as a reinforcing material of rubber compounds, the networked silica show exceptional performance for improving their tensile strength, elongation at break and toughness. Furthermore, the reduction of required amount of the additives by using networked silica is desirable to cut down expenses. The environmentally benign property of the networked silica also drives out its wide application to the preparation of rubber compounds used in tires, belts, conveyors, shoes and hoses.

### Description of Drawings

Fig. 1 is a sketch showing the structure of three-dimensional networks formed among silica particles according to the present invention.

Fig. 2 is the photos of the cut surface of the rubber compounds,

reinforced with (A) silica, (B) silica and Si-69, and the N-GP(1.0 AP(1.0)-SlL networked silica.

### Best Mode

The invention provides networked silica having three-dimensional networks among silica particles. The addition of the networked silica to diene rubber about 5 phr to 150 phr by weight of the rubber causes considerably high tensile strength, elongation at break and toughness of cured rubber compound as like the rubber compounds prepared by using the bifunctional silica coupling reagents and silica filler. The contents of organic bridge chain are ranged in about 2% to 10% by weight of silica to achieve sufficient formation of the three dimensional networks among silica particles. The first step for the preparation of the networked silica is a dehydration step, because the coupling reagents composing of silanes are highly reactive with water. After drying the networked silica at 150 °C in an inert gas flow, it is necessary to carry out further dehydration by anhydrous polar solvents such as methanol and ethanol. Trialkoxy silane molecules with various functional groups at other ends such as glycidyl, amine, chloride, thiol, aldehyde and/or carboxylic group react with silanol groups of silica in organic solvents, producing silane-coupled silica accompanying with alcohol formation as described below.

Silica - (OH) ₙ+(R¹O)₃₋ₙ Si(R²X)ₙ→ Silica -(O-)ₙSiR²X + nR'OH

Where the groups R¹, which are identical to or different from each other, represent a C₁₋₄ alkyl, each R² represents C ₃₋₄₀ alkyl, and X represents amine, amide, halide, mercapto or glycidyl functional groups. Exemplary alkyl alkoxy silanes with reactive functional groups include, but are not limited to trimethoxy 3-chloropropyl silane (CPTS), 3-mercaptopropyl silane (MPTS), 3-aninopropyl silane (APTS) and 3-glycidoxypropyl silane (GPTS). Because alcohol is produced when alkyl alkoxy silane reacts with silanol groups of silica particles, ethoxy silanes are recommended at the environment aspects rather than methoxy silanes, although methoxy silanes are not excluded from the present invention. Preferred alkyl alkoxy silanes with reactive functional groups are CPTS, MPTS, APTS and GPTS.

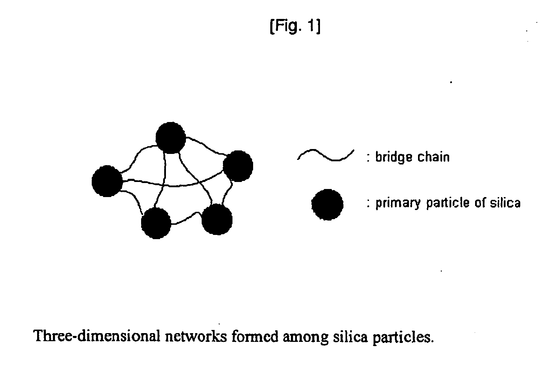

Since the network among silica particles is formed through the reactions between functional groups of silane coupled on silica particles, various bridge chains for networked silica are possible. Several pairs of functional groups can be employed to make bridge chains: amine and glycidyl groups, amine and chloride groups, amine and thiol groups, chloride and thiol groups etc. Since many alkyl alkoxy silane molecules with reactive functional groups can be coupled on each silica particle, multiple bridge chains among silica particles form through condensation reactions, producing networked structures. Many silica particles are interactive with each other, producing the network composed of multiple bridge chains. Although the chemical bonds and lengths of bridge chains among silica particles are different according to alkyl alkoxy silane molecules to be used, the physical structures of networked silica are almost same: silica particles are not aggregated, and connected with bridge chains. The structure of three-dimensional network formed among silica particles can be depicted as shown in figure 1. An example of bridge chain formed is shown below.

Silica ---(O-)₃ -Si - R²X + YR³ - Si - (O)₃ - Silica → Silica-(O)₃ Si-R²-(X-Y)-R³--Si-(O)₃₋Silica

where X and Y are reactive functional groups which can form bridge chains. If X is chlorine atom, Y can be amine or mercapto group.

The preparation of the networked silica described above is comprising of three steps: the first step is the coupling of sihne molecules with X functional groups to silica particles through the reaction with their silanol groups, the second step is the coupling of alkoxy silane molecules with Y functional groups to silica particles through the reaction with their silanol groups, and the third step is the network formation by reacting coupled silica particles with functional groups X and Y. X and Y groups must be different, but they can make chemical bonds between them. However, two steps are enough for the preparation of a networked silica when molecules having two amine groups on their opposite ends are employed as connecting materials for the silica particles coupled with silane containing glycidyl groups. For example, hexamethylenediamine reacts with glycidyl groups linked silica particles, to produce bridge chains among them. Various materials such as diamine, dichloride, diisocyanate and dicarboxylic acids are available as connecting materials in the two-step process for the preparation of networked silica.

One-step preparation of networked silica is also possible. Linear molecules with two isocyanate groups at its ends are effective to combine two silica particles by the reaction of isocyanate groups with silanol groups of silica surface. Materials having two chlorine atoms at their opposite ends also show a similar function, but they require slightly long reaction time because of their low reactivity.

The structure of networked silica mainly depends on the length and shape of bridge chains. The density of bridge chains is also important for its reinforcing function of rubber compounds. Although it is not known yet what are the best type and shape of bridge chains as well as their density. However, several suggestions can be supposed: the openings among silica particles must be large enough to allow the intrusion of rubber molecules and to entangle rubber molecules with bridge chains, resulting in a considerable increase in tensile strength of rubber compounds. On the contrary, too large openings due to extremely low density of bridge chains do not contribute to improve tensile strength, although they enhance the dispersion of silica in rubber molecules. The formation of chemical bonds between silica particles and rubber molecules may result an excessive increase in modulus of rubber compounds. Tight entanglement of rubber molecules with bridge chains and close contact of rubber molecules with silica particles considerably improves the resistance to the fatigue of rubber compounds as well as the enhancement of its dispersion, resulting in its high reinforcing function. The preparation methods of networked silica according to the present invention and its reinforcing performance to rubber compounds are further described in the following non-limiting examples.

### Mode for Invention

### EXAMPLES

The present invention is more specifically illustrated by the following examples. However, it should be understood that the present invention is not limited by these examples in any manner.

### Example 1. Preparation of network silica by three- step reaction:

Silica with a large amount of silanol groups thereon was used as the raw material for the preparation of networked silica. Fine silica powder was dehydrated at 300 °C for 1 hour in an electric furnace to remove adsorbed water. After cooling it in a vacuum desiccator to room temperature, 50 g of dehydrated silica was charged in a 1 L 3-neck round-bottomed flask. 600 mL of an anhydrous ethanol of was added to extract remained water up to extremely low level of water content to prevent side reactions of alkoxy silane with water. The mixture was stirred by using a mechanical stirrer at 400 rpm for 30 min. After decanting the used ethanol contaminated with a small amount of water, 50 mL of fresh ethanol was supplied repeatedly two more times for the complete removal of water. And decanting ethanol carefully, 24 g of 3-glycidoxypropyl trimethoxy silane (GPTS) solution in 600 mL of toluene was added to the flask equipped with a condenser and a thermometer. This mixture was refluxed at 110 °C for 24 h in the flask Coupled silica with the alkoxy silane was sufficiently washed with toluene to remove non-reacted silane and dried in an oven at 100°C for 12 hours.

As same as above, various species of alkoxy silane-coupled silica were prepared. 3-Aminopropyl triethoxy silane (APTS), 3-mercaptopropyl triethoxy silane (MPTS), and 3-chloropropyl triethoxy silane (CPTS) were also employed as coupling materials. The names of alkoxy silane-coupled silica were written as GP(x)-SIL, AP(x)-SIL, MP(x)-SIL and CP(x)-SIL according to silane being used. x in the parenthesis denoted the amount of coupled alkoxy silane on silica as mmol of silane per g silica. It was determined by thermogravimetric analysis based on the weight loss due to the combustion of carbon and hydrogen of silane with air at elevated temperature. The amounts of coupled silane on silica were different according to silane species even the concentrations of used silane solution were the same as 600 mmol/L: the amounts of coupled silane on silica were different as 1.2 mmol/g, 1.5 mmol/g, 0.7 mmol/g, and 0.5 mmol/g on silane-coupled silica of GP-SIL, AP-SIL, MP-SIL and CP-SIL respectively.

Suspension of the GP(O.6)-SIL and AP(0.6)-SIL in toluene was refluxed at 110 °C for 6 hours in a 1 L round-bottomed flask to combined silica particles. Each amount of silane-coupled silica was 50 g. After cooling to room temperature, produced networked silica was washed with toluene, filtered and dried at 100°C for 6 h in an oven. The obtained networked silica was named as *N*-GP(0.6)AP(0.6)-SIL. N meant networked silica, and GP and AP denoted used silane species to form bridge chain. For example, N-GP(x)MP(y)-SIL networked silica was prepared by the reaction of GP(x)-SIL and MP(y)-SIL in toluene by refluxing at 110 °C following the same procedure described above.

1. The coupling of silane on silica can be confirmed by thermogravimetric analysis carried out in air stream. In general, silica showed a weight loss around 100 °C due to the desorption of water. No further weight loss was observed below 1,000 °C. However, silane-coupled silica showed a weight loss around 250 °C . Carbon and hydrogen of silane burned out in air, brought about a significant weight loss. The weight loss around 250 °C was observed on networked silica similarly to silane-coupled silica, informing the content of bridge chains.

### Example 2. Preparation of networked silica by two-step and one-step processes:

Three-step reactions are required for the preparation of the *N*-GP(0.6)AP(0.6)-SIL networked silica. However, these reaction steps can be reduced by using connecting materials having two functional group. The GP(0.6)-SIL silane-coupled silica was prepared following the procedure described in EXAMPLE 1. The reaction of the GP(0.6)-SIL with hexamethylenediamine produces networked silica by combining glycidyl groups of silica particles with amine groups of the connecting materials. Detail procedure for the preparation is given below: 20 g of the GP(0.6)-SIL silica was suspended in 300 mL of toluene. 1.4 g of hexamethylenediamine was added to the suspension, and the mixture was refluxed in a 500 mL round-bottomed flask at 110 °C for 4 hours. Amine groups of hexamethylenediamine react with glycidyl groups of the GP(0.6)-SIL silica, to produce networked silica with bridge chains composed of hexamethylene skeletal among silica particles. Networked silica was recovered after washing in toluene followed by filtering and drying as like the procedure described in Example 1.

Polyethyleneimine was a suitable connecting material for the preparation of networked silica. Its imine groups combines with glycidyl groups of GPTS-coupled silica. Dichlorohexane also combines APTS-coupled silica and form networked silica through two-step process. The preparation steps of networked silica through two step reactions, therefore, are composed of the silane coupling reaction on silica surface and the formation reaction of bridge chains. The basic steps of two-step preparation are essentially the same, regardless of the nature of silane and connecting materials.

Drying step of silica in an oven and the extraction of remained water by anhydrous ethanol is important to obtain sufficient amount of silane coupling. Although diisocyanates, dichlorides and dicarboxylic acids were useful for the preparation of networked silica as connecting materials, the obtained networked silica using these materials having two reactive functional groups at their opposite ends showed slightly poor thermal stability compared to the network silica prepared through three-step process.

### Example 3. The investigation of reinforcing performance of networked silica:

Rubber compound containing networked silica was prepared by mixing rubber with other additives. Their curing characteristics were examined form their rheocurves and viscosity measurements during curing process. And tensile tests of rubber compounds provide reinforcing performance of networked silica added to them. Compositions of rubber compounds used in the tests were simplified to observe clearly the contribution of networked silica to their tensile properties. Table 1 showed the compositions of RI rubber compounds based on solution-polymerized styrene-butadiene rubber (S-SBR). Rubber and additives were mixed in an internal mixer. At first, S-SBR was masticated for one minute. After adding silica, coupling reagent and aromatic oil, a primary master batches of RI rubber compounds were obtained by mixing the rubber containing various additives at 150-160 °C for three minutes. After masticating the primary master hatch for one minute, sulfur and accelerator were added. The preparation of rubber compounds was finished with further mixing at 100 °C for three minutes.

S-SBR being used in this test was manufactured by a solution polymerization method with high homogeneity. Its average molecular weight was 560,000 and its glass transition temperature was -42°C . The contents of styrene and vinyl groups were 31 % and 30%, respectively. Detail descriptions of other additives were written at the bottom of Table 1.

**Table 1. Cure and tensile properties of rubber compounds reinforced with silica and networked silica**

| Rubber compound | | RI-1 | RI-2 | RI-3 | RI-4 |
|---|---|---|---|---|---|
| composition (phr) | | | | | |
| | Rubber^{a} | 137.5 | ₁₁137.5 | 137.5 | 137.5 |
| | Zinc oxide | 4.0 | 4.0 | 4.0 | 4.0 |
| | Sulfur | 1.5 | 1.3 | 1.5 | 1.5 |
| | Accelerator (CZ)^{b} | 1.5 | 1.3 | 1.5 | 1.5 |
| | Accelerator (DPG)^{c} | 1.0 | 1.0 | 1.0 | 1.0 |
| | Stearic acid | 2.0 | 2.0 | 2.0 | 2.0 |
| | silica^{d} | | ₁13.0 | 13.0 | |
| | Coupling reagent^{e} | | - | 1.0 | |
| | Networked silica^{f} | | - | | 13.0 |

| Cure characteristics | | | | | |
|---|---|---|---|---|---|
| | min. torque (J) | 0.67 | 0.88 | 0.81 | 0.17 |
| | max. torque (J) | 2.08 | 3.1 | 2.59 | 2.29 |
| | *t₄₀* (min) | 8.7 | 11.2 | 9.1 | 1.5 |
| | *t₉₀* (min | 10.7 | 12.9 | 10.9 | 4.8 |

| Processibility | | | | | |
|---|---|---|---|---|---|
| | Mooney viscosity | 18.4 | 27.5 | 22.9 | 20.3 |
| | *Tₐ₅* (min) | 40.0 | 59.0 | 47.0 | 2.7 |
| | *T₃₅*. (min) | 52.0 | 72.0 | 60.0 | 4.7 |
| Hardness (JIS A) | | 29 | 36 | 37 | 40 |

| Tensile property | | | | | |
|---|---|---|---|---|---|
| | Modulus (MPa) | | | | |
| | 100% | 0.04 | 0.76 | 0.85 | 0.76 |
| | 300% | - | 1.65 | 2.51 | 2.24 |
| | Tensile strength (MPa) | 1.1 | 2.1 | 2.7 | 6.1 |
| | Elongation at break (%) | 267 | 372 | 316 | 531 |

| | Abrasion property | | | | |
|---|---|---|---|---|---|
| | PICO (g) | 1.26 | 0.17 | 0.15 | 0.14 |

| | | | | | |
|---|---|---|---|---|---|
| ^{a}oil-extended S-SBR polymer (oil content = 37.5 phr), ^{b}*N*-cyclohexyl-2-benzothiazole sulfenanide, ^{c}*N,N*-diphenylguanidine, ^{d}Zeosil 175, ^{e}Bis(triethoxysilylpropyl) tetrasulfane (TESPT); its commercial name is Si-69. ^{f}*N*-GP(1.0)AP(1.0)-SIL networked silica. | | | | | |

The compositions of four RI rubber compounds were the sane except silica-related additives: the RI-1 rubber compound did not contain any silica and coupling reagent, but the RI-2 rubber compound had only silica of 13 phr. The RI-3 rubber compound contained 13 phr silica accompanying with the coupling reagent (Si-69) of 1.0 phr. Otherwise, the RI-4 rubber compound was reinforced by *N*-GP(1.0)-AP(1.0)-SIL networked silica of 13 phr without accompanying any coupling reagent.

Cure characteristics of prepared rubber compounds were examined from rheocurves recorded at 160°C. *t₉₀* times determined from rheocurves were used to decide optimum cure times. A certain amount of sheet type of rubber compounds was obtained by rolling the mixed rubber compounds in a rolling machine. A part of sheet type sample was put into a conventional flat-type mold and pressed at 160 °C in a high pressure press for an optimum cure time. Physical properties of cured rubber compounds such as modulus, tensile strength and elongation at break were measured from stress-strain curves recorded using a tensile tester. Rubber specimens were pulled up with a crosshead speed of 500 mm/min to breakpoints. Tensile strength of rubber compounds denoted the required force to brings about their fatigue at break point and elongation at break showed, the ratio for the elongation of specimens compared with fresh specimen as a percent. Convenience for processing of rubber compounds was evaluated from Mooney viscosity. *T₀₅* and *T₃₅* times denoted the changes in viscosity during their curing process. Scotch times were used as the allowed time for convenient processing of rubber compounds. Abrasion property of rubber compounds was compared with PICO values. The abrasion rate measured using a PICO abrasion tester (blade-type abrader ASTM D2228) and was represented by the weight loss during abra sion test. A 25 N of normal load was applied constantly.

Cure characteristics, Mooney viscosity and physical properties including hardness, tensile and abrasion properties of the RI rubber compounds were shown in Table 1. The changes in cure rates deduced from *t₉₀* times were not significant with the addition of silica, indicating the negligible effect of silica addition on cure characteristics of rubber compounds. On the other hand, the addition of networked silica caused considerable changes in cure rate and viscosity. If curing of rubber compounds is finished in an extraordinary short time, homogeneous crosslinking is impossible and poor convenience for the processing is inevitable. Too short scotch time of the RI-4 rubber compound did not allow a sufficient time for achieving homogeneous curing and for obtaining good physical properties of cured products.

The tensile strength of the RI-1 rubber compound without silica was low 1.1 MPa, while the RI-2 rubber compound reinforced with silica of 13 phr showed much higher tensile strength of 2.1 MPa. Elongation at break also increased with silica addition. The increase in tensile strength of the RI-3 rubber compound compared to the RI-2 rubber compound was more considerable, indicating a synergistic contribution of silica and the coupling reagent Si-69. Even its loading amount was small as just 1 phr, the increase in tensile strength with it was about 300%. 100% moduli of the RI-1, RI-2 and RI-3 rubber compounds were 0.04, 0.76 and 0.85 MPa, respectively. As like to their tensile strength, modulus also increased with the addition of silica, and the simultaneous addition of Si-69 coupling reagent with silica. The considerable decrease in elongation at break with the simultaneous addition of the coupling reagent and silica indicated negative effect of the coupling reagent, becoming brittle due to the loss of elastic property. On the other hand, the RI-4 rubber compound which was reinforced by *N*-GP(1.0)AP(1.0)-SIL networked silica showed highly enhanced tensile strength to 6.1 MPa, and elongation at break to 531 %, while the increase in modulus was small compared to the RIII rubber compounds. Hardness of the RI-4 rubber compound reinforced with the networked silica was slightly high.

Silica was an important reinforcing material minimizing abrasion rate of rubber compounds. Silica-reinforced rubber compounds showed high wear resistance, regardless of silica type. The abrasion is a very important factor determining life time of truck/bus tires, because their tread rubber compounds should sustain heavy load even at dynamic running state. High toughness of rubber compounds is helpful to enlarge the service life of tires by reducing abrasion rate.

The rubber compounds reinforced with the networked silica showed high tensile strength and elongation at break. Hardness, modulus and abrasion properties were also improved by the addition of the *N*-GP(1.0)AP(1.0)-SIL networked silica. Therefore, the networked silica was a good reinforcing material of rubber compounds to sustain high stress with high stability.

### Example 4. The effect of the loading amount of networked silica on the tensile properties of rubber compounds:

Since the reinforcing effect of silica on the physico-chemical properties of rubber compounds was strongly dependent on its loading amount, the cure and tensile properties of rubber compounds were examined with varying the loading amount of silica. Table 2 showed experimental results of rubber compounds reinforced with silica and *N*-GP(1.0)AP(1.0)-SIL networked silica of 10, 20, and 40 phr. Since the contents of zinc oxide, sulfur, CZ and DPG accelerators and stearic acid were fixed as listed in Table 1 as 4.0, 15, 1.5, 1.0 and 2.0 phr, respectively, these additives were totally denoted as 'Additive group I'.

With increasing the content of silica in rubber compounds, both the maximum and minimum torques of rubber compounds determined from rheocurves increased considerably, indicating reinforcing effect of silica. Mooney viscosity, 100% and 300% modulus, tensile strength and elongation at break of silica-reinforced rubber compounds were higher than those of the rubber compounds without silica. The increases in these properties with the loading amount of silica content were proportional. The tensile strengths of the RII-4, RII-5 and RII-6 rubber compounds which contained networked silica of 10, 20 and 40 phr, were 3.8, 8.1 and 17.8 MPa, respectively. These values were considerably higher than those of corresponding rubber compounds reinforced with the same loading amount of silica and Si-69 coupling reagent. This means that the rubber compounds reinforced with the *N* - GP(1.0)AP(1.0)-SIL networked silica showed higher tensile strengths than those reinforced with silica and coupling reagent at the range of this loading level. Although *t₉₀* times determined from rheocurves and scotch times measured from Mooney viscometer significantly decreased with increasing the content of the networked silica, the considerable increase in tensile strength without remarkable changes in modulus and elongation at break suggested that networked silica was an exceptional reinforcing material of rubber compounds to increase their toughness. The small PICO value of the rubber compounds reinforced with networked silica also supposed its feasibility as reinforcing material to enhance the service life to tires.

**Table 2. Comparison of the reinforcing effects of silica and networked silica with varying their contents in rubber compounds**

| | Rubber compound | RII-1 | RII-2 | RII-3 | RII-4 | RII-5 | RII-6 |
|---|---|---|---|---|---|---|---|
| Composition (phr) | | | | | | | |
| | Rubber^{a} | 137.5 | 137.5 | 137.5 | 137.5 | 137.5 | 137.5 |
| | Additive group I^{b} | 10.0 | 10.0 | 10.0 | 10.0 | 10.0 | 10.0 |
| | Silica^{c} | 10.0 | 20.0 | 40.0 | - | - | - |
| | Networked silica^{d} | - | - | - | 10.0 | 20.0 | 40.0 |

| Cure characteristics | | | | | | | |
|---|---|---|---|---|---|---|---|
| | min. torque (J) | 0.66 | 0.81 | 1.50 | 0.66 | 0.85 | 1.22 |
| | max. torque (J) | 2.23 | 2.57 | 3.46 | 2.16 | 2.43 | 3.27 |
| | *t₄₀* (min) | 10.5 | 119 | 11.5 | 3.6 | 2.1 | 3.9 |
| | *t₉₀* (min) | 12.3 | 15.4 | 14.2 | 5.6 | 7.0 | 24.8 |

| Processibility | | | | | | | |
|---|---|---|---|---|---|---|---|
| | Mooney viscosity | 34.5 | 42.3 | 63.5 | 35.0 | 42.1 | 58.9 |
| | *T₀₅* (min) | 50.4 | 65.5 | 58.3 | 15.1 | 5.7 | 4.7 |
| | *T₃₅* (min) | 63.3 | 82.7 | 97.7 | 18.7 | 8.1 | 10.3 |
| | Hardness (JIS A) | 32 | 37 | 51 | 34 | 39 | 50 |

| Tensile property | | | | | | | |
|---|---|---|---|---|---|---|---|
| | Modulus (MPa) | | | | | | |
| | 100% | 0.55 | 0.74 | 1.08 | 0.73 | 0.84 | 1.37 |
| | 300% | 1.27 | 1.67 | 2.65 | 2.26 | 2.35 | 4.32 |
| | Tensile-strength (MPa) | 2.4 | 4.0 | 10.6 | 3.8 | 8.1 | 17.8 |
| | Elongation at break (%) | 471 | 549 | 751 | 431 | 630 | 699 |

| Abrasion property | | | | | | | |
|---|---|---|---|---|---|---|---|
| | PICO (g) | 0.277 | 0.121 | 0.081 | 0.260 | 0.106 | 0.065 |
| | | | | | | | |

| | | | | | | | |
|---|---|---|---|---|---|---|---|
| ^{a} oil-expanded S-SBR polymer (oil content = 37.5 phr), ^{b} including zinc oxide (4.0 phr), sulfur (1.5 phr), accelerator CZ (1.5 phr), accelerator DPG (1.0 phr) and stearic acid (2.0 phr), ^{c}Zeosil 175, ^{d}*N*-GP ((1.0)AP(1.0)-SIL networked silica. | | | | | | | |

### Example 5. The reinforcing role of bridge chains of networked silica in rubber compounds:

The reinforcing function of networked silica might be dependent on the type and amount of bridge chains combining silica particles each other. Table 3 listed tensile properties of the rubber compounds reinforced with the *N*-GP(x)MP(x)-SIL networked silica. The contents of GPTS and MPTS were varied as 0.2, 0.5 and 1.0 mmol per gram of silica in order to compare the role of bridge chains in the formation of crosslinked networks. The rubber compound reinforced with the *N-*GP(1.0)AP(1.0)-SIL networked silica was also prepared.

The increases in tensile properties of rubber compounds by the addition of networked silica were considerable, regardless of the content of bridge chains as shown in Table 3. Tensile strength of rubber compounds reinforced with the *N -* GP(x)MP(x)-SIL networked silica was high around 14.7 MPa, even though the content of bridge chains varied as 0.2, 0.5 and 1.0 mmol/g. These results chimed the sufficient content of bridge chains was not too much, because the entanglement requires only connecting chain among silica particles to hold rubber molecular.

The rubber compounds reinforced with the *N*-GP(x)MP(x)-SIL networked silica showed slightly low tensile strengths compared to that reinforced with the *N* - GP(x)AP(x)-SIL networked silica, while their modulus and hardness were slightly high. The easy breakage of C-S-O bonds in the *N*-GP(x)MP(x)-SIL networked silica due to the attack of accelerator molecules in rubber compounds caused low tensile strength, however, further reactions between produced sulfur radicals with double bonds of rubber molecules formed C-S bonds, enhancing their modulus and hardness. Elongation at break was also low due to the formation of the chemical bonds between networked silica and rubber molecules.

**Table 3. Tensile properties of rubber compounds reinforced with the N-GP(x)MP(x)-SIL networked silica**

| | Rubber compound | RIII-I | RIII-2 | RIII-3 | RIII-4 |
|---|---|---|---|---|---|
| | Networked silica | *N*-GP(0.2) MP(0.2)-SIL | *N*-GP(0.5) MP(0.5)-SIL | *N*-GP(1.0) MP(1.0)-SIL | *N*-GP(1.0) AP(1.0)-SIL |
| Composition (phr) | | | | | |
| | Rubber^{a} | 137.5 | 137.5 | 137.5 | 137.5 |
| | Additive group I | 10.0 | 10.0 | 10.0 | 10.0 |
| | Silica content | 40 | 40 | 40 | 40 |
| Hardness (JIS A) | | 50 | 50 | 51 | 52 |

| Tensile property | | | | | |
|---|---|---|---|---|---|
| Modulus (MPa) | | | | | |
| | 100% | 1.37 | 1.18 | 1.18 | 1.57 |
| | 300% | 4.31 | 3.57 | 3.92 | 5.03 |
| Tensile strength (MPa) | | 17.8 | 15.4 | 16.6 | 14.6 |
| Elongation at break (%) | | 699 | 698 | 688 | 600 |

| Abrasion property | | | | | |
|---|---|---|---|---|---|
| PICO (g) | | 0.065 | 0.059 | 0.056 | 0.066 |

| | | | | | |
|---|---|---|---|---|---|
| ^{a}oil-expanded S-SBR polymer (oil content = 37.5 phr). | | | | | |

### Example 6. The thermal stability of rubber compounds reinforced with networked silica:

Rubber compounds used in tire should be stable in terms of physical and tensile properties even at an elevated temperature, because a large amount of heat is generated by tire running. Exposure of rubber compounds to high temperature for a long time causes severe breakage of carbon chains, resulting in a considerable decrease in tensile strength. Further crosslinking at the elevated temperature increases modulus of rubber compounds, losing their elasticity and lowering their absorption capability of given impacts. Therefore, the tensile property of the rubber compounds reinforced with networked silica after the exposure to elevated temperature is important for their application to tire production, although they should have high tensile strength even at freshly prepared state.

The tensile properties of the silica-reinforced rubber compounds after thermal aging were listed in Table 4. Hardness and modulus increased with thermal aging, indicating the loss of elasticity. However, high tensile strengths of the rubber compounds reinforced with networked silica after thermal aging showed clearly their highly stable reinforcing performance. Networked silica irrespective to the type and content of bridge chains were also effective to sustain high elongation at break after thermal aging. High stability of networked silica to thermal treatment was very helpful to prepare tires with extraordinary long service life.

**Table 4. Tensile properties of rubber compounds reinforced with various types of networked silica after thermal aging ^{a}**

| Rubber compound | | RIV-1 | RIV-2 | RIV-3 | RIV-4 | RIV-5 | RIV-6 | RIV-7 |
|---|---|---|---|---|---|---|---|---|
| Reinforcing system^{b} | | | | | | | | |
| | Silica only | ○ | | | | | | |
| | Silica + Si-69^{c} | | ○ | | | | | |
| | | | | *N*- | *N*- | *N-* | *N*- | *N-* |
| Networked silica | | | | GP(02) | GP(0.5) | GP(1.0) | GP(0.6) | GP(0.6) |
| | | | | MP(02) | MP(0.5) | MP(1.0) | PolyAP^{d} | PolyAP^{c} |
| | | | | -SIL | -SIL | -SIL | -SIL | -SIL |

| Unaged rubber Property | | | | | | | | |
|---|---|---|---|---|---|---|---|---|
| Hardness (JIS A) | | 52 | 52 | 50 | 51 | 52 | 55 | 57 |

| | Tensile property | | | | | | | |
|---|---|---|---|---|---|---|---|---|
| | Modulus (MPa) | | | | | | | |
| | 100% | 1.06 | 1.48 | 1.14 | 1.20 | 1.56 | 1.33 | 1.63 |
| | 300% | 2.52 | 5.32 | 3.57 | 3.92 | 5.03 | 4.35 | 5.61 |
| | Tensile strength (MPa) | 10.0 | 10.8 | 15.4 | 16.6 | 14.6 | 22.7 | 21.4 |
| | Elongation at break (%) | 752 | 463 | 698 | 688 | 601 | 784 | 720 |
| | | | | | | | | |

| Rubber property after thermal aging^{a} | | | | | | | | |
|---|---|---|---|---|---|---|---|---|
| | Hardness (JIS A) | 56 | 55 | 53 | 54 | 55 | 58 | 61 |
| | Modulus (MPa) | | | | | | | |
| | 100% | 1.34 | 1.73 | 1.46 | 1.63 | 1.74 | 1.73 | 1.94 |
| | 300% | 3.32 | 5.97 | 4.38 | 5.26 | 6.22 | 5.57 | 6.78 |
| | Tensile strength (MPa) | 9.6 | 9.5 | 13.7 | 14.2 | 14.6 | 20.8 | 20.5 |
| | Elongation at break (%) | 645 | 405 | 602 | 550 | 529 | 705 | 628 |

| | | | | | | | | |
|---|---|---|---|---|---|---|---|---|
| ^{a}thermally aged at 105 °C for 24 h, ^{b} content of reinforcing materials was 50 phr, ^{c} content of Si-69 was 4.0 phr, ^{d} networked silica prepared by a two-step reaction using polyethyleneimine with molecular weight of 25,000 as a connecting material, ^{e} the networked silica prepared by an one-step reaction using polyethyleneimine with molecular weight of 25,000 as a connecting material. | | | | | | | | |

### Example 7. Reinforcing natural rubber by a networked silica:

Since the entanglement of rubber molecules with silica particles reinforces rubber compounds, the reinforcing performance depends largely on the chemical and structural nature of rubber molecules. One of widely used polymer in tire manufxturing is natural rubber (NR) because of its high mechanical strength attributed to its high molecular weight and high degree of strain due to induced crystallisation. Since the tread rubber compounds of truck and bus tire - usually prepared by NR - contracted with earth surface under high stress, it must have high toughness to maintain its shape and elastic property under huge load and dynamic stress. Table 5 showed the reinforcing effect of networked silica on NR compounds. The test results of the rubber compound composed of SBR were also listed for comparison.

The RV-1 rubber compound reinforced with silica without any coupling reagents showed too long *t₉₀* time to cure it in proper processing time. The addition of the coupling reagent, however, was effective to enhance cure rates, to obtain properly cured rubber compound economically. The coupling reagent was also effective to enhance the tensile strength of the rubber compound composed of NR as like that of SBR: the tensile strength of the RV-2 rubber compound was 29.1 MPa much higher than that of the RV-1 rubber compound 21.3- MPa. The tensile strength of the RV-3 rubber compound reinforced with the *N*-GP(1.0)AP(1.0)-SIL networked silica was higher than that of the RV-2 rubber compound, indicating that networked silica was also effective for NR to improve its tensile strength as like as SBR. A high tensile strength of the RV-3 rubber compound compared with the RV-2 rubber compound indicated that the networked silica was a powerful reinforcing material for NR even without use of coupling reagent Si-69.

**Table 5. Cure and tensile properties of NR compounds reinforced with networked silica.**

| Rubber compound | | RV-1 | RV-2 | RV-3 | RV-4 |
|---|---|---|---|---|---|
| Composition (phr) | | | | | |
| | SBR^{a} | | | | 137.5 |
| | NR^{b} | 100.0 | 100.0 | 100.0 | |
| | Additive group I | 10.0 | 10.0 | 10.0 | 10.0 |
| | Silica | 50.0 | 50.0 | | |
| | Coupling reagent^{c} | - | 4.0 | | |
| | Networked silica^{d} | - | - | 50.0 | 50.0 |

| Cure characteristics | | | | | |
|---|---|---|---|---|---|
| | min torque (J) | 3.05 | 1.05 | 1.70 | 2.02 |
| | max torque (J) | 6.79 | 5.32 | 4.86 | 3.95 |
| | *t₄₀* (min) | 9.5 | 8.4 | 3.1 | 3.8 |
| | *t₉₀* (min) | 31.9 | 14.7 | 10.7 | 26.7 |

| Processibility | | | | | |
|---|---|---|---|---|---|
| | Mooney viscosity | 80.8 | 31.4 | 156 | 114 |
| | T₀₅ (min) | 8.5 | 10.5 | 1.2 | 6.3 |
| | *T₃₅* (min) | 10.0 | 13.2 | 7.8 | |
| Hardness (JIS A) | | 70 | 71 | 62 | 56 |

| Tensile property | | | | | |
|---|---|---|---|---|---|
| | Modulus (MPa) | | | | |
| | 100% | 1.59 | 3.44 | 2.41 | 1.84 |
| | 300% | 4.72 | 12.45 | 14.02 | 7.85 |
| | Tensile strength (MPa) | 21.3 | 29.1 | 31.3 | 19.7 |
| | Elongation at break (%) | 659 | 556 | 532 | 560 |

| | | | | | |
|---|---|---|---|---|---|
| ^{a} oil-extended SBR (oil content = 37.5 phr), ^{b} natural rubber, ^{c}Si-69, ^{d} *N*-GP(1.0)AP(1.0)-SIL networked silica. | | | | | |

### Example 8. The control of cure rates of rubber compounds reinforced with networked silica:

Since the tensile property of rubber compounds is fundamentally based on the cured structure of rubber molecules, their cure rates are very important to obtain high tensile strength and toughness. Homogeneous crosslinking density of cured rubber compounds disperses loaded stress equally to all directions, sustaining them to resist even under high strain. Networked silica has highly valuable reinforcing performance to rubber compounds, but its extraordinary acceleration of curing rates limits its application to practical aspect. Too short scotch times of rubber compounds causes uneven distribution of crosslinking density and poor tensile property.

Networked silica is produced through various condensation reactions between amine and glycidyl groups, between mercapto and chloride groups, etc. Most of the functional groups are combined with others on the surface of silica, but a part of them must be remained to be non-reacted because of the steric hindrance of solid silica particles. The rapid cure rates of rubber compounds reinforced with networked silica was attributed to the relatively large amount of non-reacted functional groups such as amine, glycidyl, mercapto, and chloride groups thereon. Therefore, the quantitative formation reaction of bridge chains minimizes non-reacted functional groups on networked silica and a negligible acceleration to the cure rates by adding networked silica will be observed. However, there is an actual limit to increase the extent of the formation reaction, so a further treatment of non-reacted functional groups is required to inactive them in curing process.

Table 6 showed the effect of further acid treatment to networked silica on the cure and tensile properties of rubber compounds reinforced with them. The cure rate of the RVI-2 rubber compound containing the coupling reagent Si-69 was slightly higher than that of the RVI-1 rubber compound reinforced with silica only, indicating that the coupling reagent also enhances the cure rate of rubber compounds. The cure rate, however, was very rapid on the RVI-3 rubber compound reinforced with the *N* - GP(0.4)AP(0.4)-SIL networked silica: *t₅₀* time denoting the time required for 50% cure was very short 2.1 min for the RVI-3 rubber compound, while that was 9.1 min for the RVI-2 rubber compound reinforced with silica and the coupling reagent. Even though the tensile properties of the RVI-3 rubber compound, especially tensile strength and elongation at break, were much better than those of the RVI-2 rubber compound, the extremely rapid cure limits the practical application of networked silica to prepare large rubber compounds requiring a high degree of homogeneity.

An acid treatment is a suitable method for networked silica to reduce its acceleration of cure process when it is added to rubber compounds. The RVI-4 rubber compound containing the *N*-GP(0.4)AP(0.4)-SIL networked silica treated with acetic acid showed a slightly lowered cure rate compared to the RVI-3 rubber compound reinforced with the non-treated networked silica. *t₅₀* time increased considerably at 11.2 min on the RVI-5 rubber compound reinforced with the dichloroacetic acid treated *N*-GP(0.4)AP(0.4)-SIL networked silica. *t₉₀* time, achieving 90% cure considerably extended at 17.0 min by treating the networked silica with dichloroacetic acid, suggesting the possibility of cure rate control by acid treatment. Acids combined with non-reacted amine groups of networked silica, reducing its acceleration effect. However, the treatment of dicholoacetic acid caused a significant lowering of tensile strength, and thus, the strength and amount of acid used in the treatment for the neutralizing remained amine groups should be carefully determined according to the type and amount of non-reacted functional groups.

Hexamethylene amine is also effective to reduce the remained non-reacted glycidyl groups and hexamethylene chloride helps to neutralize the non-reacted amine groups. Since these materials can be removed after neutralizing reaction, the contribution of non-reacted functional groups to cure characteristics can be minimized effectively by using these functional materials in spite of the strong acid treatment.

**Table 6. Cure and tensile properties of rubber compounds reinforced with acid-treated networked silica**

| Rubber compound | | RVI-1 | RVI-2 | RVI-3 | RVI-4 | RVI-5 |
|---|---|---|---|---|---|---|
| Reinforcing system | | | | | | |
| | Silica | 50 | - | - | - | - |
| | Silica+ Si-69 | - | 50 | - | - | - |
| | *N*-GP(0.4)AP(0.4)-SIL | - | - | 50 | - | - |
| | *N*-GP(0.4)AP(0.4)-SIL AA(0.2)^{a} | - | - | - | 50 | - |
| | *N*-GP(0.4)AP(0.4)-SIL DCAA(0.2)^{b} | - | - | - | - | 50 |

| Cure characteristics | | | | | | |
|---|---|---|---|---|---|---|
| | min torque (J) | 0.90 | 0.57 | 0.55 | 0.61 | 0.57 |
| | max torque (J) | 1.82 | 1.98 | 1.45 | 1.53 | 1.58 |
| | *t₂* (min) | 3.1 | 6.4 | 1.3 | 3.1 | 9.4 |
| | *t₅₀* (min) | 5.2 | 9.1 | 2.1 | 4.1 | 11.2 |
| | *t₉₀* (min) | 18.0 | 14.2 | 10.5 | 6.4 | 17.0 |
| Hardness (JIS A) | | 62 | 56 | 58 | 58 | 59 |

| Tensile property | | | | | | |
|---|---|---|---|---|---|---|
| | Modulus (MPa) | | | | | |
| | 100% | 1.23 | 1.77 | 1.15 | 1.17 | 1.15 |
| | 300% | 3.79 | 6.60 | 3.93 | 3.67 | 3.29 |
| | Tensile strength (MPa) | 21.7 | 18.6 | 22.5 | 24.1 | 18.6 |
| | Elongation at break (%) | 862 | 578 | 797 | 829 | 792 |

| | | | | | | |
|---|---|---|---|---|---|---|
| ^{a} treated with acetic acid, ^{b} treated with dichloroacetic acid. | | | | | | |

### Example 9. High dispersion of networked silica in rubber compounds:

High reinforcing performance of silica can be expected when its particles are highly dispersed in rubber compounds, because the reinforcing is caused by the interaction between rubber molecules and silica particles. If silica particles present in rubber as aggregates and so they crush into smaller particles due to stress, the addition of silica into rubber compounds brings about a negative contribution to their tensile property. Therefore, the high dispersion of silica is essentially required to achieve their high tensile property.

Networked silica is hydrophobic due to combined organic materials on its surface, while parent silica is hydrophilic due to its plenty of silanol groups. Hydrophobicity of networked silica enhances the miscibility of silica particles with organic rubber molecules. Furthermore, a large amount of openings formed among silica particles by bridge chains allowed easy intrusion of rubber molecules, expecting better dispersion of networked silica than that of silica.

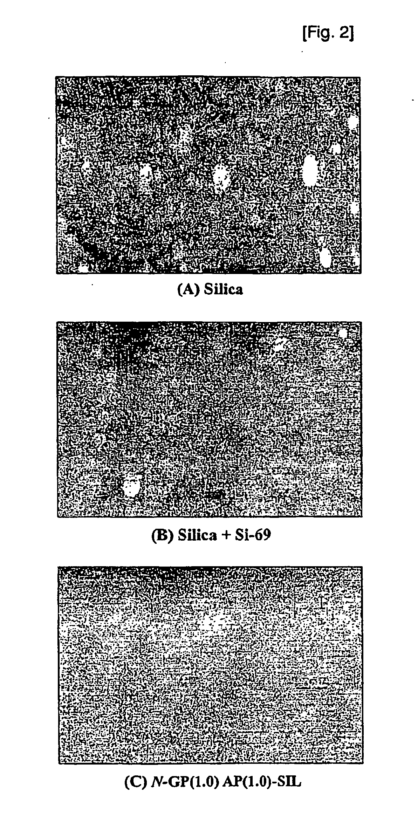

Figure 2 showed photos of the cut surface of the RIV-1, RIV-2 and RIV-5 rubber compounds described in Table 4. Large white spots ascribed by silica aggregates were clearly observed on the RIV-1 and RIV-2 rubber compounds. The dispersion of silica particles was slightly enhanced on the RIV-2 rubber compound due to the contribution of the coupling reagent by forming chemical bonds between rubber molecules and silica particles. On the other hand, the RIV-5 rubber compound reinforced with the N - GP(1.0)AP(1.0)-SIL networked silica did not show any aggregates of silica particles, suggesting its high dispersion. The extraordinary high dispersion of networked silica in rubber molecules can be expected from its network structure of silica aggregates and hydrophobic surface nature, comparing to the conventional (silica + coupling reagent) reinforcing system.

Surface modification of silica with alkoxy silane and the network formation of bridge chains among silica particles cause the enlargement of pore opening of silica. Pore size distributions of silica and networked silica deduced from their nitrogen adsorption isotherms represent the changes in their pore structure by introducing network structure among silica particles. Table 7 listed surface areas and average pore diameters of parent silica, silane-coupled silica and networked silica. The decrease in the surface area of silica by silane coupling was attributed to the blocking of micropores by silane, so the decrease in the surface area related to micropores was significant. The *N*-GP(0.4)AP(0.4)-SIL networked silica did not have the surface area due to micropores, suggesting a complete blocking of micropores. On the other hand, average pore diameters of silica increased with silane coupling. The more interesting thing was that the average pore diameter calculated from the adsorption branches of nitrogen adsorption isotherms was considerably larger than those calculated from the desorption branches. In general, desorption branches of the isotherm represent the entrances of pores, because pores are filled with adsorbate at the starting condition for desorption. On the other hand, the adsorption branches are sensitive to pore space because adsorbate is adsorbed on the surface of empty pores. Therefore, the increase in pore diameter, especially that determined from the adsorption branches clearly indicates the gradual expansion of voids surrounded with silica particles by the silane coupling and network formation. The relatively small increase in the pore diameters determined from the desorption branches supposes that the large voids are connected with small openings. The networks formed among silica particles enlarged the pore openings, making easier intrusion of rubber molecules into voids, resulting in better dispersion. These results mean that voids surrounding silica particles expands with the silane coupling, but further enlargement is caused by the formation of networks among silica particles.

**Table 7. Surface area and average pore diameter of silica, silane-coupled silica and networked silica**

| | Surface area (m²/g) | | | Average pore diameter (nm) | |
|---|---|---|---|---|---|
| | BET | External³ | Micropore^{b} | from desorption branch | from adsorption branch |
| Silica | 165 | 133 | 32 | 25.1 | 28.8 |
| GP(0.4)-SIL | 150 | 156 | - | 25.3 | 29.9 |
| AP(0.4)-SIL | 137 | 130 | 7 | 26.2 | 32.6 |
| *N*-GP(0.4)AP(0.4)-SIL | 145 | 146 | - | 27.5 | 34.1 |

| | | | | | |
|---|---|---|---|---|---|
| ^{a} measured from *t*-plot, ^{b} calculated by BJH method. | | | | | |

### Industrial Applicability

As the invention described above in detail, 1) the application of networked silica to rubber compounds brought about considerable increases in tensile strength and elongation at break compared to those of the rubber compounds reinforced with silica and coupling reagents, while the increase in modulus was not significant, 2) the addition of networked silica strengthened rubber compounds and reduced abrasion, 3) the networked structure and hydrophobic surface of networked silica provided exceptional dispersion of silica particles in rubber compounds, and 4) the stable structure of networked silica and the close interaction among silica particles and rubber molecules result in high thermal stability. Even though the rapid increase in the cure rates of rubber compounds due to the addition of networked silica is not desirable results, post-treatments of it with acid, amine, and epoxy materials or the addition of retarder into rubber compound can control cure rates up to proper levels. Furthermore, the amount of required silane for the preparation of networked silica is much smaller than the conventionally added silane to rubber compounds as coupling reagents, suggesting the reduction of chemical expenses by introducing networked silica. The number of silanol groups on the surface of networked silica - the adsorption sites of accelerators and activators - was considerably small compared to those on silica, and thus, the required amount of chemicals for proper cure rate and crosslinking density could be reduced. The application of networked silica to rubber compounds, in summary, enhances their tensile properties and dispersion of silica accompanying with reducing the costs for chemicals. Increased mixing step and low mixing temperature, demerit of silica as a reinforcing material even with silane coupling reagents can be improved by using networked silica, reducing the processing cost of rubber compounds. Also environmental problem caused by the formation alcohol at the reaction between silanol group of silica and alkoxy group of silane during mixing, can be eliminated by using networked silica.

## Claims

1. A three-dimensionally networked silica composed of silica particles of at most 100 nm combined by bridge chains of randomly formed covalent bonds, polyimine, peptide, and polyether groups.

2. A three-dimensionally networked silica according to claim 1, wherein the length of bridge chains is ranged in 0.5 to 100 nm.

3. A three-dimensionally networked silica according to claim 1, wherein the content of bridged chains per silica is ranged in 0.1 to 1.5 mmol/g.

4. A three-dimensionally networked silica according to claim 1, wherein the combining reactions are carried out in toluene, xylene, octane, butanol as solvents at 40 to 150°C with refluxing.

5. A three-dimensionally networked silica according to claim 1, wherein silica particles are combined by reacting silica particles coupled with trialkoxy silane having an amine substituent and silica particles coupled with trialkoxy silane having a glycidyl substituent, or
by reacting silica particles coupled with trialkoxy silane having an amine substituent and silica particles coupled with trialkoxy silane having a chloride substituent, or
by reacting silica particles coupled with trialkoxy silane having a glycidyl substituent and silica particles coupled with trialkoxy silane having a mercapto substituent, or
by reacting silica particles coupled with trialkoxy silane having a glycidyl substituent and silica particles coupled with trialkoxy silane having a hydroxyl substituent, or
by reacting silica particles coupled with trialkoxy silane having a chloride substituent and silica particles coupled with trialkoxy silane having a mercapto substituent.

6. A three-dimensionally networked silica according to claim 5, wherein the coupling reactions between silica particles and silane and between silane-coupled silica particles are carried out in toluene by refluxing.

7. A three-dimensionally networked silica according to claim 5, wherein the silane having an amine substituent is 3-aminopropyltriethoxy silane and the silane having a glycidyl substituent is 3-glycidoxypropyltrimethoxy silane.

8. A three-dimensionally networked silica according to claim 5, wherein the silane having an amine substituent is 3-aminopropyltriethoxy silane and the silane having a chloride substituent is 3-chloropropyltrimethoxy silane.

9. A three-dimensionally networked silica according to claim 5, wherein the silane having a mercapto substituent is 3-mercaptopropyltrimetboxy silane and the silane having a chloride substituent is 3-chlompropyltrimethoxy silane.

10. A three-dimensionally networked silica according to claim 5, wherein the silane having a mercapto substituent is 3-mercaptopropyltrimethoxy silane and the silane having a glycidyl substituent is 3-glycidyloxypropyltrimethoxy silane.

11. A three-dimensionally networked silica according to claim 1, wherein silica particles are combined by reacting silane-coupled silica particles with connecting materials with multifunctional groups on their ends in toluene by refluxing.

12. A three-dimensionally networked silica according to claim 11, wherein the connecting materials are diamines, dichlorides, diisocynates and dicarboxylic acids with methylene chains of C₆-C₁₀₀.

13. A three-dimensionally networked silica according to claim 11, wherein silica particles are combined by reacting silica particles with dichlorides having methylene chains of C₆-C₁₀₀ in toluene by refluxing.

14. A three-dimensionally networked silica according to claim 11, wherein connecting materials are diisocyanato having methylene chains of C₆-C₁₀₀.

15. A three-dimensionally networked silica according to claim 11, wherein the silane having an amine substituent is 3-aminopropyltriethoxy silane and the connecting material is dichloro, dibromo or diiodoalkane with the methylene skeletal of C₆ -C₄₀.

16. A three-dimensionally networked silica according to claim 11, wherein the silane having a mercapto substituent is 3-mercaptopropyltrimethoxy silane and the connecting material is dichloro, dibromo or diiodoalkane with the methylene skeletal of C₆-C₄₀.

17. A three-dimensionally networked silica according to claim 11, wherein the silane having a glycidyl substituent is 3-glycidyloxypropyltrimethoxy silane and the connecting material is diamino or diisocynato alkane with the methylene skeletal of C₆-C₄₀.

18. A three-dimensionally networked silica according to claim 11, wherein the silane having a glycidyl substituent is 3-glycidoxypropyttrimethoxy silane and the connecting material is polyethyleneimine with molecular weight 600-30,000.

19. A three-dimensionally networked silica according to claim 18, wherein the skeletal of connecting materials is polyether of C -C .

20. A three-dimensionally networked silica according to claim 1, wherein silica particles are combined by reacting silica particles and multi-functional connecting materials in toluene by refluxing.

21. A three-dimensionally networked silica according to claim 20, wherein the multifunctional connecting materials are dichlorides with the methylene skeletal of C₆-C₄₀.

22. A three-dimensionally networked silica according to claim 20, wherein the multifunctional connecting materials are diisocyanates with the methylene skeletal of C₆-C₄₀.

23. A three-dimensionally networked silica according to claim 5, wherein the non-reacted amine groups are inactivated by reacting with chloroalkane with C**₄** C₁₂ in toluene with refluxing.

24. A three-dimensionally networked silica according to claim 5, wherein the non-reacted amine groups are inactivated by reacting with monochloro or ichloro acetic acid.

25. A three-dimensionally networked silica according to claim 5, wherein the non-reacted glycidyl groups are inactivated by reacting with aminoalkane with C₄ -C₁₂ in toluene with refluxing.

26. A three-dimensionally networked silica according to claim 5 wherein the non-reacted chloride groups are inactivated by reacting with aminoalkane with C ₄-C₁₂ in toluene with refluxing.

27. A three-dimensionally networked silica according to claim 1, which is an additive with 5 to 100 phr to reinforce tensile and mechanical properties of rubber compounds composed of zinc oxide, stearic acid, curative accelerator, activator, processing oil, stabilizers and retarder.

28. A three-dimensionally networked silica according to claim 27, which is an additive for rubber compounds composed of diene rubber, natural rubber, butadiene rubber, styrene-butadiene rubber and butyl rubber as base rubber.

## Patentansprüche

1. Dreidimensional vernetztes Siliciumdioxid gebildet aus Siliciumdioxidpartikeln, die eine Größe von höchstens 100 nm aufweisen, wobei die Partikel über Ketten aus zufällig gebildeten kovalenten Bindungen, Polyimingruppen, Peptidgruppen und Polyethergruppen verbunden sind.

2. Dreidimensional vernetztes Siliciumdioxid gemäß Anspruch 1, wobei die Länge der Ketten 0,5 bis 100 nm beträgt.

3. Dreidimensional vernetztes Siliciumdioxid gemäß Anspruch 1, wobei der Gehalt an Ketten in dem dreidimensional vernetzten Siliciumdioxid 0,1 bis 1,5 mmol/g beträgt.

4. Dreidimensional vernetztes Siliciumdioxid gemäß Anspruch 1, wobei die Verknüpfungsreaktionen in Toluol, Xylol, Octan, Butanol als Lösungsmittel bei 40 bis 150°C unter Rückfluss durchgeführt werden.

5. Dreidimensional vernetztes Siliciumdioxid gemäß Anspruch 1, wobei die Siliciumdioxidpartikel verbunden werden, indem an Trialkoxysilan mit einem Aminsubstituenten gekoppelte Siliciumdioxidpartikel und an Trialkoxysilan mit einem Glycidylsubstituenten gekoppelte Siliciumdioxidpartikel zur Reaktion gebracht werden, oder an Trialkoxysilan mit einem Aminsubstituenten gekoppelte Siliciumdioxidpartikel und an Trialkoxysilan mit einem Chloridsubstituenten gekoppelte Siliciumdioxidpartikel zur Reaktion gebracht werden, oder an Trialkoxysilan mit einem Glycidylsubstituenten gekoppelte Siliciumdioxdpartikel und an Trialkoxysilan mit einem Mercaptosubstituenten gekoppelte Siliciumdioxidpartikel zur Reaktion gebracht werden, oder an Trialkoxysilan mit einem Glycidylsubstituenten gekoppelte Siliciumdioxidpartikel und an Trialkoxysilan mit einem Hydroxysubstituenten gekoppelte Siliciumdioxidpartikel zur Reaktion gebracht werden, oder an Trialkoxysilan mit einem Chloridsubstituenten gekoppelte Siliciumdioxidpartikel und an Trialkoxysilan mit einem Mercaptosubstituenten gekoppelte Siliciumdioxidpartikel zur Reaktion gebracht werden.

6. Dreidimensional vernetztes Siliciumdioxid gemäß Anspruch 5, wobei die Kupplungsreaktionen zwischen den Siliciumdioxidpartikeln und Silan und zwischen den an Silan gekoppelten Siliciumdioxidpartikeln in Toluol unter Rückfluss durchgeführt werden.

7. Dreidimensional vernetztes Siliciumdioxid gemäß Anspruch 5, wobei das Silan mit Aminsubstituent 3-Aminopropyltriethoxysilan ist und das Silan mit einem Glycidylsubstituent 3-Glycidoxypropyltrimethoxysilan ist.

8. Dreidimensional vernetztes Siliciumdioxid gemäß Anspruch 5, wobei das Silan mit einem Aminsubstituent 3-Aminopropyltriethoxysilan ist und das Silan mit einem Chloridsubstituent 3-Chlorpropyltrimethoxysilan ist.

9. Dreidimensional vernetztes Siliciumdioxid gemäß Anspruch 5, wobei das Silan mit einem Mercaptosubstituent 3-Mercaptopropyltrimethoxysilan ist und das Silan mit einem Chloridsubstituent 3-Chlorpropyltrimethoxysilan ist.

10. Dreidimensional vernetztes Siliciumdioxid gemäß Anspruch 5, wobei das Silan mit einem Mercaptosubstituent 3-Mercaptopropyltrimethoxysilan ist und das Silan mit einem Glycidylsubstituent 3-Glycidyloxypropyltrimethoxysilan ist.

11. Dreidimensional vernetztes Siliciumdioxid gemäß Anspruch 1, wobei die Siliciumdioxidpartikel durch Reaktion von Silan-gekoppelten Siliciumdioxidpartikeln mit einem Vernetzungsmaterial, das mehrere funktionelle Gruppen an den Enden trägt, in Toluol unter Rückfluss verbunden werden.

12. Dreidimensional vernetztes Siliciumdioxid gemäß Anspruch 11, wobei das Vernetzungsmaterial Diamine, Dichloride, Diisocyanate und Dicarbonsäuren mit C₆₋₁₀₀-Methylenketten sind.

13. Dreidimensional vernetztes Siliciumdioxid gemäß Anspruch 11, wobei die Siliciumdioxidpartikel durch Reaktion von Siliciumdioxidpartikeln mit Dichloriden, die C₆₋₁₀₀-Methylenketten aufweisen, in Toluol unter Rückfluss verbunden werden.

14. Dreidimensional vernetztes Siliciumdioxid gemäß Anspruch 11, wobei das Vernetzungsmaterial Diisocyanate mit C₆₋₁₀₀-Methylenketten sind.

15. Dreidimensional vernetztes Siliciumdioxid gemäß Anspruch 11, wobei das Silan mit einem Aminsubstituenten 3-Aminopropyltriethoxysilan ist und das Vernetzungsmaterial ein Dichloralkan, Dibromalkan oder Diiodalkan mit einem C₆₋₄₀-Methylenskelett ist.

16. Dreidimensional vernetztes Siliciumdioxid gemäß Anspruch 11, wobei das Silan mit einem Mercaptosubstituent 3-Mercaptopropyltrimethoxysilan ist und das Vernetzungsmaterial ein Dichloralkan, Dibromalkan oder Diiodalkan mit einem C₆₋₄₀-Methylenskelett ist.

17. Dreidimensional vernetztes Siliciumdioxid gemäß Anspruch 11, wobei das Silan mit einem Glycidylsubstituent 3-Glycidyloxypropyltrimethoxysilan ist und das Vernetzungsmaterial ein Diaminoalkan oder Diisocyanatoalkan mit einem C₆₋₄₀-Methylenskelett ist.

18. Dreidimensional vernetztes Siliciumdioxid gemäß Anspruch 11, wobei das Silan mit einem Glycidylsubstituent 3-Glycidoxypropyltrimethoxysilan ist und das Vernetzungsmaterial ein Polyethylenimin mit einem Molekulargewicht von 600-30.000 ist.

19. Dreidimensional vernetztes Siliciumdioxid gemäß Anspruch 18, wobei das Skelett des Vernetzungsmaterials ein C₆₋₅₀-Polyether ist.

20. Dreidimensional vernetztes Siliciumdioxid gemäß Anspruch 1, wobei die Siliciumdioxidpartikel durch Reaktion von Siliciumdioxidpartikeln mit multifunktionalem Vernetzungsmaterial in Toluol unter Rückfluss verbunden werden.

21. Dreidimensional vernetztes Siliciumdioxid gemäß Anspruch 20, wobei das multifunktionale Vernetzungsmaterial Dichloride mit einem C₆₋₄₀-Methylenskelett sind.

22. Dreidimensional vernetztes Siliciumdioxid gemäß Anspruch 20, wobei das multifunktionale Vernetzungsmaterial Diisocyanate mit einem C₆-₄₀-Methylenskelett sind.

23. Dreidimensional vernetztes Siliciumdioxid gemäß Anspruch 5, wobei die nicht reagierten Aminogruppen durch Reaktion mit einem C₄₋₁₂-Chloralkan in Toluol unter Rückfluss inaktiviert werden.

24. Dreidimensional vernetztes Siliciumdioxid gemäß Anspruch 5, wobei die nicht reagierten Aminogruppen durch Reaktion mit Monochloressigsäure oder Dichloressigsäure inaktiviert werden.

25. Dreidimensional vernetztes Siliciumdioxid gemäß Anspruch 5, wobei die nicht reagierten Glycidylgruppen durch Reaktion mit C₄₋₁₂-Aminoalkan in Toluol unter Rückfluss inaktiviert werden.

26. Dreidimensional vernetztes Siliciumdioxid gemäß Anspruch 5, wobei die nicht reagierten Chloridgruppen durch Reaktion mit C₄₋₁₂-Aminoalkan in Toluol unter Rückfluss inaktiviert werden.

27. Dreidimensional vernetztes Siliciumdioxid gemäß Anspruch 1, das als Additiv zu 5-100 phr (parts per hundred rubber) in Kautschukverbindungen vorliegt, um die Elastizität und mechanischen Eigenschaften zu verbessern, wobei die Kautschukverbindungen Zinkoxid, Stearinsäure, Vernetzungsbeschleuniger, Aktivierungsmittel, Verarbeitungsöl, Stabilisatoren und Verzögerungsmittel enthalten.

28. Dreidimensional vernetztes Siliciumdioxid gemäß Anspruch 27 als Additiv für Kautschukverbindungen, die aus Dien-Kautschuk, natürlichem Kautschuk, Butadien-Kautschuk, Styrol/Butadien-Kautschuk und Butyl-Kautschuk als Basiskautschuk bestehen.

## Revendications

1. Silice mise tridimensionnellement en réseau constituée de particules de silice d'au maximum 100 nm combinées par des chaînes en pont constituées de liaisons covalentes formées de manière aléatoire, de groupes polyimine, peptide et polyéther.

2. Silice mise tridimensionnellement en réseau selon la revendication 1, dans laquelle la longueur des chaînes en pont est dans la plage de 0,5 à 100 nm.

3. Silice mise tridimensionnellement en réseau selon la revendication 1, dans laquelle la teneur des chaînes pontées par silice est dans la plage de 0,1 à 1,5 mmole/g.

4. Silice mise tridimensionnellement en réseau selon la revendication 1, dans laquelle les réactions de combinaison sont effectuées dans le toluène, le xylène, l'octane, le butanol en tant que solvants entre 40 et 150 C avec reflux.

5. Silice mise tridimensionnellement en réseau selon la revendication 1, dans laquelle les particules de silice sont combinées par mise en réaction de particules de silice couplées avec du trialcoxysilane ayant un substituant amine et des particules de silice couplées avec du trialcoxysilane ayant un substituant glucidyle, ou
en faisant réagir des particules de silice couplées avec du trialcoxysilane ayant un substituant amine et des particules de silice couplées avec du trialcoxysilane ayant un substituant chlorure, ou
en faisant réagir des particules de silice couplées avec du trialcoxysilane ayant un substituant glucidyle et des particules de silice couplées avec du trialcoxysilane ayant un substituant mercapto, ou
en faisant réagir des particules de silice couplée avec du trialcoxysilane ayant un substituant glucidyle et des particules de silice couplées avec du trialcoxysilane ayant un substituant hydroxyle, ou
en faisant réagir des particules de silice couplées avec du trialcoxysilane ayant un substituant chlorure et des particules de silice couplées avec du trialcoxysilane ayant un substituant mercapto.

6. Silice mise tridimensionnellement en réseau selon la revendication 5, dans laquelle les réactions de couplage entre des particules de silice et le silane et entre des particules de silice couplées à du silane sont effectuées dans du toluène par reflux.

7. Silice mise tridimensionnellement en réseau selon la revendication 5, dans laquelle le silane ayant un substituant amine est le 3-aminopropyletriéthoxy silane et le silane ayant un substituant glucidyle est le 3-glycidoxypropyltriméthoxy silane.

8. Silice mise tridimensionnellement en réseau selon la revendication 5, dans laquelle le silane ayant un substituant amine est le 3-aminopropyletriéthoxy silane et le silane ayant un substituant chlorure est le 3-chloropropyltriméthoxy silane.

9. Silice mise tridimensionnellement en réseau selon la revendication 5, dans laquelle le silane ayant un substituant mercapto est le 3-mercaptopropyltriméthoxy silane et le silane ayant un substituant chlorure est le 3-chloropropyltriméthoxy silane.

10. Silice mise tridimensionnellement en réseau selon la revendication 5, dans laquelle le silane ayant un substituant mercapto est le 3-mercaptopropyltriméthoxy silane et le silane ayant un substituant glucidyle est le 3-glycidyloxypropyltriméthoxy silane.

11. Silice mise tridimensionnellement en réseau selon la revendication 1, dans laquelle des particules de silice sont combinées en faisant réagir des particules de silice couplées à du silane avec des matériaux de connexion ayant des groupes multifonctionnels sur leurs extrémités, dans du toluène par reflux.

12. Silice mise tridimensionnellement en réseau selon la revendication 11, dans laquelle les matériaux de connexion sont des diamines, des dichlorures, des diisocyanates et des acides dicarboxyliques ayant des chaînes méthylène en C₆-C₁₀₀.

13. Silice mise tridimensionnellement en réseau selon la revendication 11, dans laquelle les particules de silice sont combinées en faisant réagir des particules de silice avec des dichlorures ayant des chaînes méthylène en C₆-C₁₀₀ dans du toluène par reflux.

14. Silice mise tridimensionnellement en réseau selon la revendication 11, dans laquelle les matériaux de connexion sont diisocyanato ayant des chaînes méthylène en C₆-C₁₀₀.

15. Silice mise tridimensionnellement en réseau selon la revendication 11, dans laquelle le silane ayant un substituant amine est du 3 - aminopropyletriéthoxysilane et le matériau de connexion est dichloro, dibromo,ou diiodoalcane ayant le squelette de méthylène en C₆-C₄₀.

16. Silice mise tridimensionnellement en réseau selon la revendication 11, dans laquelle le silane ayant un substituant mercapto est 3-mercaptopropyltriméthoxysilane et le matériau de connexion est dichloro, dibromo,ou diiodoalcane ayant le squelette de méthylène en C₆-C₄₀.

17. Silice mise tridimensionnellement en réseau selon la revendication 11, dans laquelle le silane ayant un substituant glucidyle est 3-glycidoxypropyltriméthoxysilane et le matériau de connexion est diamino ou diisocyanato alcane ayant le squelette de méthylène en C₆-C₄₀.

18. Silice mise tridimensionnellement en réseau selon la revendication 11, dans laquelle le silane ayant un substituant glycidile est 3-glycidoxypropyltriméthoxysilane et le matériau de connexion est polyéthylèneimine ayant un poids moléculaire de 600 à 30 000.

19. Silice mise tridimensionnellement en réseau selon la revendication 18, dans laquelle le squelette des matériaux de connexion est polyéther en C₆-C₅₀.

20. Silice mise tridimensionnellement en réseau selon la revendication 1, dans laquelle des particules de silice sont combinées en faisant réagir des particules de silice et des matériaux de connexion multifonctionnels dans du toluène par reflux.

21. Silice mise tridimensionnellement en réseau selon la revendication 20, dans laquelle les matériaux de connexion multifonctionnels sont des dichlorures ayant le squelette de méthylène en C₆-C₄₀.

22. Silice mise tridimensionnellement en réseau selon la revendication 20, dans laquelle les matériaux de connexion multifonctionnels sont des diisocyanates ayant le squelette de méthylène en C₆- C₄₀.

23. Silice mise tridimensionnellement en réseau selon la revendication 5, dans laquelle les groupes amine n'ayant pas réagi sont inactivés par réaction avec du chloroalcane avec C₄-C₁₂ dans du toluène avec reflux.

24. Silice mise tridimensionnellement en réseau selon la revendication 5, dans laquelle les groupes amine n'ayant pas réagi sont inactivés par réaction avec de l'acide monochloro ou dichloro acétique.

25. Silice mise tridimensionnellement en réseau selon la revendication 5, dans laquelle les groupes glycidyle n'ayant pas réagi sont inactivés par réaction avec aminoalcane avec C₄-C₁₂ dans du toluène avec reflux.

26. Silice mise tridimensionnellement en réseau selon la revendication 5, dans laquelle les groupes chlorure n'ayant pas réagi sont inactivés par réaction avec aminoalcane avec C₄-C₁₂ dans du toluène avec reflux.

27. Silice mise tridimensionnellement en réseau selon la revendication 1, qui est un additif ayant de 5 à 100 phr pour renforcer les propriétés mécaniques et de traction de compositions de caoutchouc constituées d'oxyde de zinc, d'acide stéarique, d'accélérateur de durcissement, d'activateur, d'huile de traitement, de stabilisateurs et d'un retardateur.

28. Silice mise tridimensionnellement en réseau selon la revendication 27, qui est un additif pour des compositions de caoutchouc constituées de caoutchouc diène, de caoutchouc naturel, de caoutchouc butadiène, de caoutchouc styrène-butadiène et de caoutchouc butyle en tant que caoutchouc de base.
